# EUROPEAN PATENT SPECIFICATION

(11) **EP 2 166 440 B1**
(45) Date of publication and mention of the grant of the patent: **06.11.2019**
(21) Application number: 08016691.1
(22) Date of filing: 23.09.2008
(51) Int. Cl.: G06F 3/048, H04M 1/725

(54) **Method, device and system for communicating**
Kommunikationsverfahren, -vorrichtung und -system
Procédé, dispositif et système de communication

(43) Date of publication of application: 24.03.2010
(73) Proprietor: Vodafone Holding GmbH, 40213 Düsseldorf (DE)
(72) Inventor: Velick, Deborah, 40233 Düsseldorf (DE)
(74) Representative: Jostarndt Patentanwalts-AG

(56) References cited:
- WO-A-03/094473
- WO-A-2007/095224
- US-A1- 2004 141 599
- US-A1- 2007 157 105
- US-A1- 2007 232 277
- US-A1- 2008 163 090

## Description

The present invention is related to a method, device and system for communicating. In particular, the present invention is related to a method according to claim 1, a device according to claim 6, and a system according to claim 7.

### Background of the invention

Communication generally becomes more and more important today, Especially communication with modern digital communication devices such as personal digital assistants (PDA), portable computers, mobile telephones, palm top computers etc. is of increasing importance. Sometimes these devices are also equipped with a camera and a microphone for taking pictures as well as for recording video and audio data. The features and capabilities of the devices lead to an increasing number of data files that may be exchanged between different devices and users by wireless or wired networks. As an example, a mobile telephone is no longer limited to receiving and making voice calls but it may take photographs, receive e-mails and SMS-messages and voice messages. A variety of different kinds of communication increases the number of communication items significantly. This number of communication items is increased even more because one and the same communication item of the above mentioned types is frequently copied to a plurality of recipients. In addition to that, the communication devices store contact information of every individual with whom any kind of communication has taken place. This type of information is referred to as contacts. The contacts form part of the communication items. Technically speaking all communication items are data items. Because of the shear quantity it becomes consequently more and more difficult for individuals to organize their communication items. Some of these communication items contain valuable data for the user and the prudent user will therefore make backups of the data stored on his mobile device.

E.g. this can be done through appropriate software running on a computer to synchronise the computer with the mobile device. However, in reality some users do not pay the necessary attention to this aspect. In consequence, they loose valuable data if their mobile communication device gets lost or destroyed. Under this aspect it is quite advantageous if the data items of the user are not only stored on his mobile communication device but also on a server of a network provider.

In this case the user does not have to take any action to make a backup storage of his communication items and contacts. If his mobile communication device gets lost or destroyed all his communication items which were stored on his mobile communication device can be recovered from the backup copy stored on the server of the network provider.

At the same time this concept enables the user to work on the communication items not only through his mobile device but also through other alternative devices which are allowed to have contact to the personal files of the user on the server. Such an alternative device could be a computer with internet access allowing the user to contact the files which are stored on the server of the network provider.

Taking this as a starting point there is a need to support the user of a communication device to efficiently manage his communication tasks.

US 2007/0157105 A1 describes a sidebar for a browser program. The sidebar includes several modules. One module allows the user to share data items. For this purpose, the user can click onto a slide sheet presenting sharing buttons, which can be used to send a data item to other internet users by instant messaging, via a blog or by e-mail. Upon clicking onto a sharing button a full service application is initiated. Furthermore, the sidebar includes an e-mail module which provides options including a reply to the sender.

WO 2007/095224 A2 discloses a method for presenting a spatial thumbnail for a media object. The thumbnail includes location related content associated with the media object. US 2008/0163090 A1 describes a semi-transparent contact list overlaying a browser window which allows for selecting a contact to initiate communication US2007/232277 discloses a mobile device comprising a multimedia log displayed on the device's screen and enabling the user to select the media (e. g., voice call) to respond to an individual communication, independently of the media of that communication (e. g., text message).

### Summary of the invention

The present invention proposes the concept of providing a user with an efficient access to data items.

According to a first aspect, the invention suggests a method for communicating between digital communication devices which are connected by a communication network in accordance with claim 1.

Advantageously, the method comprises the step of providing an option to respond through a different communication channel than the one via which the data item has been received. This feature provides a user with a plurality of available communication options without having to enter many commands.

In one embodiment, the method further comprises the step of transmitting a response when a user selects a specific communication channel.

Advantageously, the method further comprises the step of transmitting the selected data item when a user selects a specific communication channel.

According to an embodiment of the invention, the method further comprises the step of displaying the icon related to a data item in two portions, wherein a contact portion contains contact information of the sender and a content portion contains the communication content.

The icon related to a data item is displayed as a function of a data type of the data item. Different icons are provided for each different data type.

In yet another advantageous embodiment the method further comprises the step of placing a pointing element onto the first portion of the icon to display all available contact information of the sender.

According to a second aspect, the present invention suggests a communication device provided with a display and processing means for controlling the display to present the graphical user interface to execute the method according to one or several of the method claims.

According to a third aspect, the present invention suggests a system comprising a communication device and a server on which data items are stored, wherein the communication device and the server are connected by a communication network, wherein the communication device is a device according to the second aspect of the invention to execute a method according to one or several of the method claims.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims. One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### Brief description of the drawings

In the accompanying drawing exemplary embodiments of the present invention are shown. It shows:
- Figure 1: a schematic illustration of a communication environment;
- Figure 2: a schematic illustration of the structure of a screen of an application of the present invention;
- Figure 3: a portion of figure 2 in greater detail;
- Figures 4: a schematic illustration of incoming content on the display of a communication device;
- Figures 5: an illustration of the different lay-outs of icons for different communication channels; and
- Figures 6: a visualisation of the method for communicating according to the present invention.

### Detailed description of embodiments of the invention

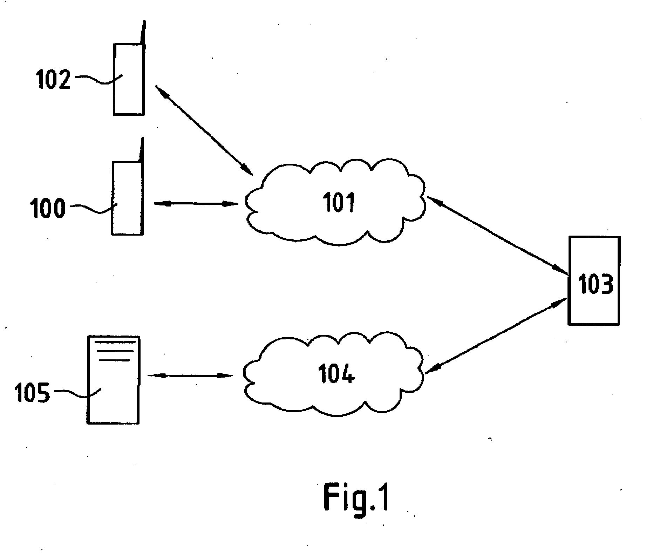

Figure 1 schematically depicts a communication environment. A mobile communication device 100, such as, a mobile phone, a PDA or the like is connected to a wireless public land mobile network (PLMN). The PLMN 101 is a wireless telecommunication network according to GSM standard or according to the UTMS standard for example. The user of the communication device 100 can set up a connection to another communication device 102 through the network 101. The communication devices 100 and 102 are only representative examples of a large plurality of communication devices. The network 101 is also connected with a server 103 of the network provider. Among other functionalities the server stores communication items, i.e. data files, of the users of the network 101.

Additionally, the server 103 is connected to a second communication network 104 such as the internet. Figure 1 shows also another communication device 105 such as a computer which is also connected to the network 104.

In an embodiment of the invention it is assumed that the computer 105 belongs to the user of the communication device 100. The computer 105 enables this user by means of appropriate software including access control features to access his communication items stored on the server 103. The access control can be based on codes and/or smart cards. This concept enables a user to work on communication items stored on the server 103 in a more convenient way because the computer 105 usually has a bigger screen and a more comfortable keyboard than a mobile communication device. The structure of the computer 105 is conventional and is not described here for the sake of conciseness.

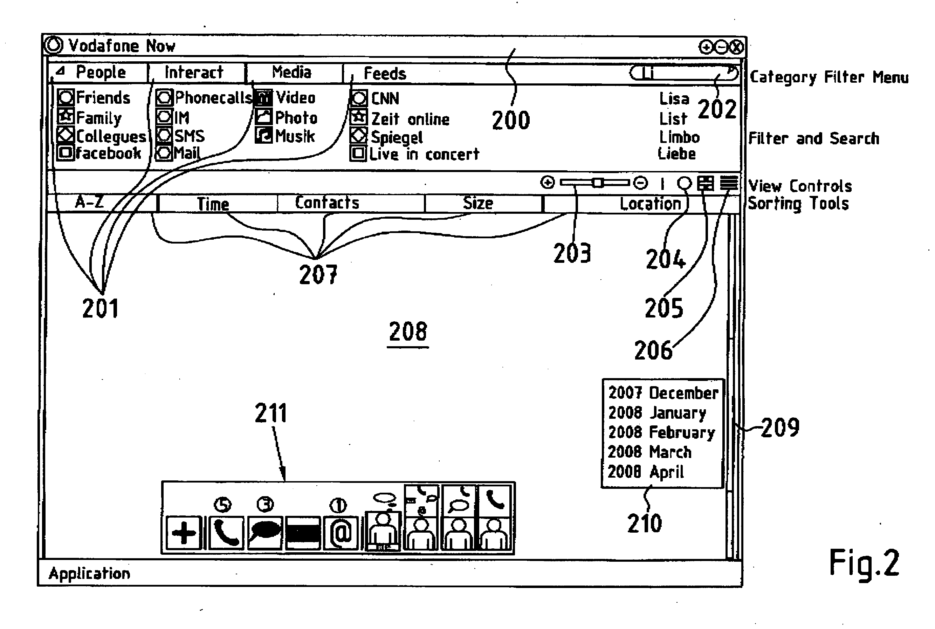

Figure 2 shows the structure of a display 200 of an application running on the computer 105. The computer 105 is not shown in Figure 2.

The top of the screen 200 provides the user with a category filter menu 201 allowing him to select between people, interaction, media, and feeds, such as are RSS-feeds. At the same time the user may search for certain keywords in a search window 202 and corresponding search results are displayed instantaneously below the search window 202. Below the category filter menu 201 there are icons enabling the user to select certain filters such as friends, family, colleagues and face book in the category of people. The category of interaction is structured according to different types of communication such as phone calls, instant messaging (IM), SMS-messages, and e-mails. The category of media provides a selection among video, photo, and music. The category of feeds is e.g. online services of news companies. Below the filter and search menu there are some input elements 203 to 206 allowing the user to control the view on the screen. The input elements 203 to 206 form a view control for the screen. Input element 203 is a horizontal slider which will be explained later in connection with other functionalities. With input element 204 a user selects to display all communication items in a 2-dimensional view on the screen as will be explained in more detail further below in the description. Input element 205 initiates a grid view of items and input element 206 a line view. These functionalities will be explained further below. Just below the view control there are sorting tools 207 provided allowing a user to sort items on the screen according to the alphabet from a to z, according to time, contacts, size and location. The biggest portion of the display 200 is covered by the content area 208 where icons representing the content are displayed. On the right hand side of the contact area there is a scroll bar 209 allowing the user to scroll through the communication items which will be explained later. The length of the scroll bar indicates the length of the time span. In one embodiment the user is informed about the time span by a label 210 which is faded in. Finally, below the content area 208 there is a menu bar 211 providing contextual options and a notification area.

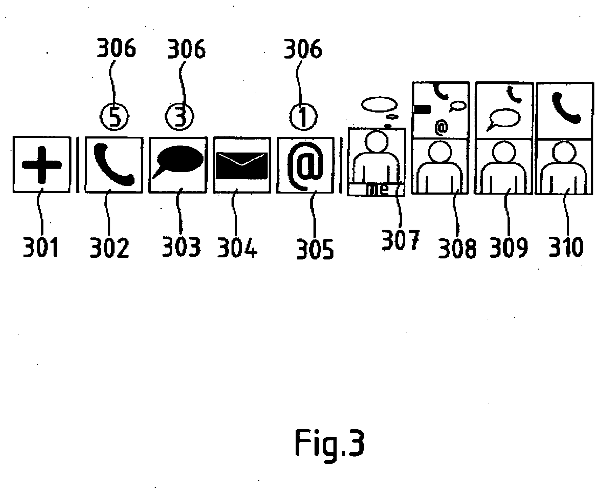

In figure 3 the menu bar and notification area 211 is shown in greater detail. There is an icon 301 which is a general option to add a new icon to the menu bar 211. Icons 302 to 305 provide different communication options. The icon 302 is for setting up a phone call, icon 203 is related to SMS- messages, icon 304 is related to e-mails and icon 305 to internet feeds, such as RSS-feeds from news providers. On top of the communication icons 302 to 305 there are indicators 306 indicating the number of missed events in the related content area. In the situation shown in figure 3 the user has missed five telephone calls; he has three unread SMS-messages and one unopened internet feed.

Next to-the communication items 302 to 305 there is one shortcut icon 307 displaying the details of the user upon actuation of the icon 307. Finally, there are on the right hand side of the menu bar 209 three icons 308 to 310 which are related to windows of ongoing communication. On top of those icons 308 to 310 open communication channels are symbolised by associated symbols inside icons 311 to 313. Each of the icons 311 to 313 provide a shortcut directly to the respective communication window in which one or several communication channels are open. The symbols representing the open communication channels correspond to the symbols which are used for the corresponding communication icons 302 to 305. The symbols are shown inside the icons 311 to 313.

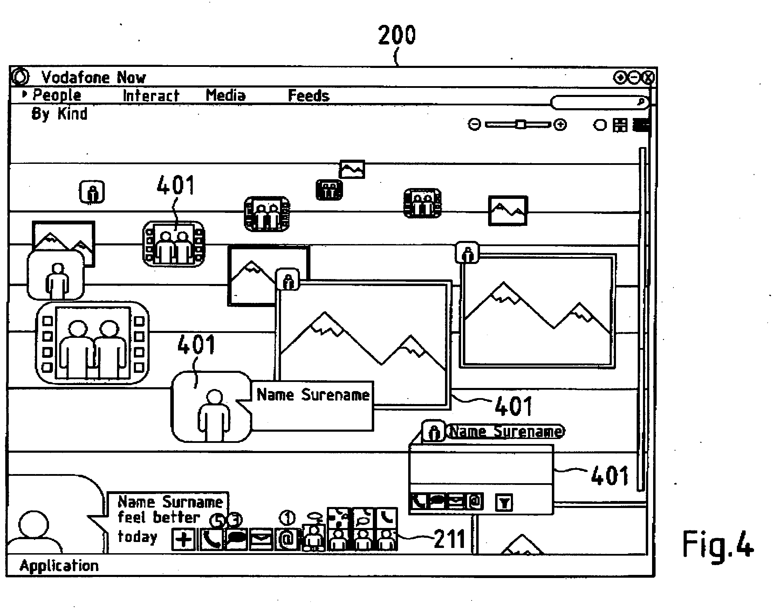

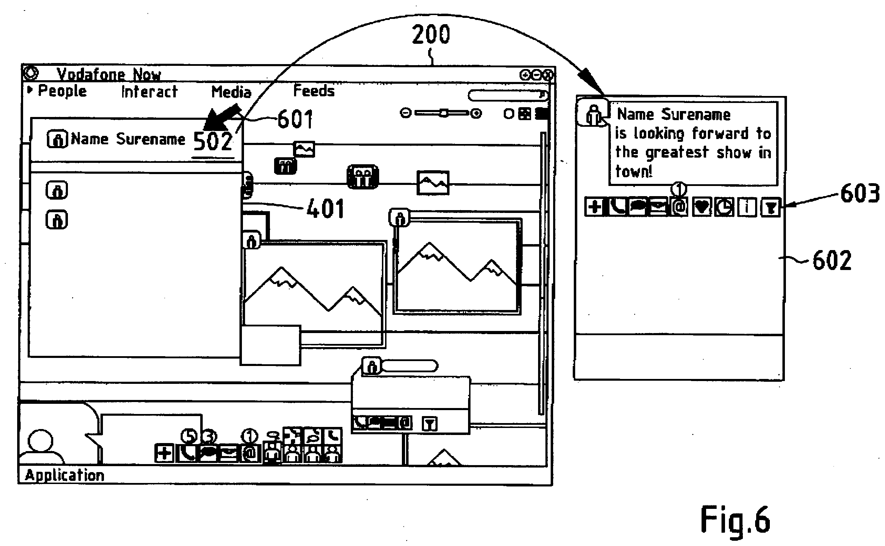

In figure 4 the display 200 is shown containing various kinds of communication items of the user. In figure 4 the communication items are shown in a perspective graphical presentation such that more recent communication items are shown in the foreground of figure 4 while older communication items are presented in a reduced size and shifted to the background. In this way, a perspective impression is created for the user helping him to easily navigate through the communication items. Each communication item is shown in a separate icon 401, which are different for the different communication channels but which all follow a common concept. All icons 401 identify the sender of the communication item and display at least a portion of the contents. All different kinds of communication icons provide direct access to all available communication channels of the communication items. There is an option to directly reply through a different communication channel than the one, which has been chosen by the sender of the communication item. This will be described in more detail in connection with figure 6. There is also an option to filter the presentation of the communication items according to the type of contents, which has been received. However, the filtering and the sorting of the communication item is subject of another invention of the applicant of the present invention.

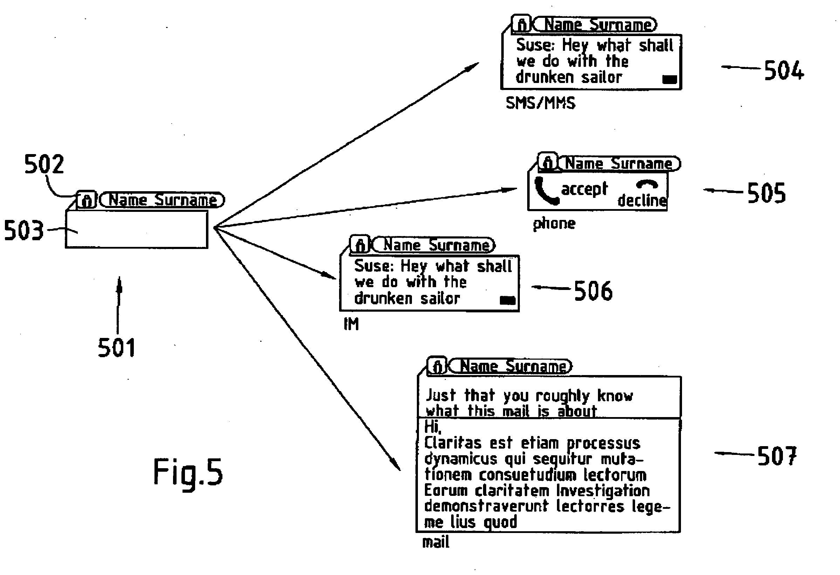

Figure 5 shows the underlying concept for the icons 401, which are also called interaction elements 501 in the following. On the left side of figure 5, the interaction element 501 represents a standard container for incoming communications. The focus in this presentation is on the communication. In the upper portion of the interaction element 501, the sender of the communication item is identified with his name and surname in a contact portion 502. Below this identification part there is a content portion 503 to display a first glimpse on the content of the communication item. The interaction element 501 exemplifies a general concept. However, for each communication channel, the contact portion 502 of the interaction element 501 is designed slightly different to serve the needs of each channel: The interaction element 504 is related to SMS/MMS messages, the interaction element 503 is related to incoming telephone calls, the interaction element 506 is related to an instant messaging message, and the interaction element 507 is related to an e-mail.

As can be seen in figure 5 the interaction elements 504 and 506 only provide for a comparatively small content portion reflecting the fact that SMS/MMS messages and IM messages are usually short and require only little space to display them. The interaction element 505 for telephone calls contains in the content area symbols representing a telephone receiver allowing a user to accept or reject a call. Obviously, there is no room required for an additional text message. Finally, interaction element 507 for e-mails comprises the largest content area corresponding to the fact that e-mails tend to be much longer than SMS or IM messages. Therefore, more space is required to display the message. The common structure of the different types of the interaction elements 504 to 507 facilitates the operation of the communication device while their different designs support the best use of the available surface of the display, i.e. the size of the interaction elements 504 to 507 is adapted to the actual needs of the user.

It is noted that in figure 4 the contact portion 502 cannot be shown for all icons because of the reduced size of some icons caused by the perspective reduction. If the user clicks onto one of the communication items 401 shown in figure 4 the corresponding icon 401 is brought to the foreground of the presentation. At the same time, the icon is displayed in a larger size.

If the user clicks onto one communication item in the presentation shown in figure 4 the corresponding icon is brought to the foreground of the presentation and enlarged in size as it is shown in figure 6. If the user clicks with the curser onto the contact area of the enlarged icon this action brings up the options and details related to the communication item. In particular in figure 6 a situation is shown in which a user has clicked with a cursor 601 as a pointing element onto the contact portion 502 of the icon 401. In response to that a new window 602 is opened on the display. For the sake of a better intelligibility of figure 6 the new window 602 is shown outside the display 200. In reality it is of course shown on the display. Within the new window 602, a menu 603 is displayed which contains options for replying to the received communication item through different communication channels. The different communication channels contain telephone, SMS messages, instant messaging messages and e-mails. However, in other embodiments of the present invention there may be other and/or more communication channels available for responding to a received communication item. Typically, the menu provides every communication channel as an option for a response through which communication items can be received.

The response can be sent to the sender of the selected communication item by the user by clicking on an icon presented in the menu of the optional communication channels.

The invention allows a user to perform his communication tasks very efficiently, on the one hand the number of inputs needed from the user is limited and on the other hand the overview for the user is improved.

### List of reference numerals:

- 100, 102: communication device
- 101: network
- 103: server
- 104: network
- 105: communication device
- 200: display
- 201: category filter menu
- 202: search window
- 203: input element; horizontal slider
- 204: input element; user selects one item to be displayed on the full screen
- 205: input element; initiates a grid view of items
- 206: input element; initiates a line view
- 207: sorting tools
- 208: content area
- 209: menu bar
- 301: icon; general option to add a new icon to the menu bar
- 302: icon; setting up a phone call
- 303: icon; related to sms messages
- 304: icon; related to e-mails
- 305: icon; related to internet feeds
- 306: indicators
- 401: icon
- 501: interaction element
- 502: contact portion
- 503: content portion
- 504 - 507: interaction element
- 601: cursor
- 602: new window
- 603: menu

## Claims

1. Method for communicating between digital communication devices (100, 102, 105) which are connected by a communication network (101, 104), wherein the communication network provides access to stored data items, the method being carried out by said digital communication devices (100, 102, 105) and comprising controlling a display (200) of a source communication device (105) to present icons (401) within a graphical user interface, wherein the icons are related with data items, **characterized in that** the method comprises the steps of:
- receiving a selection of one icon being related to a data item received from a sender, the data item being one of the stored data items;
- controlling the display to open a new window (602) containing contact information of the sender of the data item being related to the selected icon;
- offering a selection of communication channels within a menu (603) which is displayed in the new window (602);
- providing an option to respond to the data item through a different communication channel than the one via the data item has been received from the sender; and
wherein the method further comprises the steps of:
- displaying the icon (504-507) related to the data item as a function of a data type of the data item by providing a different icon for each different data type,
whereby communication items (401) are shown in a perspective graphical presentation such that more recent communication items are shown in the foreground, while older communication items (401) are presented in a reduced size and shifted to the background such that a perspective impression is created for the user,
whereby if the user clicks on to one of the communication items (401), the corresponding icon (401) is brought to the foreground of the presentation and at the same time is displayed in a larger size.

2. Method according to claim 1, wherein the method further comprises the step of transmitting a response when a user selects a specific communication channel.

3. Method according to claim 1 or 2, wherein a response is sent to the sender of the selected communication item by clicking on an icon presented in the menu.

4. Method according to claim 1, wherein the method further comprises the step of displaying the icon related to the data item in two portions, wherein a contact portion (502) identifies the sender and a content portion contains the communication content (503).

5. Method according to claim 4, wherein the method further comprises the step of placing a pointing element (601) onto the contact portion (502) of the icon being related to the data item to display all available contact information of the sender.

6. Communication device (105) provided with a display (200) and processing means for controlling the display to present the graphical user interface to execute the method according to one or several of the preceding claims.

7. System comprising a communication device (105) and a server (103) on which data items are stored, wherein the communication device and the server are connected by a communication network (104), wherein the communication device is a device according to claim 6 for executing a method according to one or several of the claims 1-5.

## Patentansprüche

1. Verfahren zur Kommunikation zwischen digitalen Kommunikationsvorrichtungen (100, 102, 105), welche durch ein Kommunikationsnetzwerk (101, 104) verbunden sind, wobei das Kommunikationsnetzwerk einen Zugriff auf gespeicherte Datenelemente bereitstellt, wobei das Verfahren durch die digitalen Kommunikationsvorrichtungen (100, 102, 105) durchgeführt wird und das Steuern einer Anzeige (200) einer Quellenkommunikationsvorrichtung (105) umfasst, um Icons (401) innerhalb einer grafischen Benutzeroberfläche darzustellen, wobei die Icons auf Datenelemente bezogen sind, **dadurch gekennzeichnet, dass** das Verfahren folgende Schritte umfasst:
- Empfangen einer Auswahl eines Icons, welches auf ein Datenelement bezogen ist, welches von einem Sender empfangen wird, wobei das Datenelement eines der gespeicherten Datenelemente ist;
- Steuern der Anzeige, ein neues Fenster (602) zu öffnen, welches Kontaktinformationen des Senders des Datenelements enthält, das auf das ausgewählte Icon bezogen ist;
- Anbieten einer Auswahl von Kommunikationskanälen innerhalb eines Menüs (603), welches in dem neuen Fenster (602) angezeigt wird;
- Bereitstellen einer Option, um auf das Datenelement durch einen Kommunikationskanal zu reagieren, welcher sich von dem, mittels welchem das Datenelement von dem Sender empfangen wurde, unterscheidet; und wobei das Verfahren ferner die folgenden Schritte umfasst:
- Anzeigen des Icons (504-507), welches auf das Datenelement bezogen ist, als Funktion eines Datentyps des Datenelements durch Bereitstellen eines unterschiedlichen Icons für jeden unterschiedlichen Datentyp,
wodurch, Kommunikationselemente (401) in einer perspektivischen grafischen Darstellung derart gezeigt werden, dass neuere Kommunikationselemente im Vordergrund gezeigt werden, wohingegen ältere Kommunikationselemente (401) in einer verringerten Größe dargestellt werden und derart in den Hintergrund verschoben werden, dass ein perspektivischer Eindruck für den Nutzer geschaffen wird,
wodurch, wenn der Nutzer eines der Kommunikationselemente (401) anklickt, das entsprechende Icon (401) in den Vordergrund der Darstellung gebracht wird und zeitgleich in einer größeren Größe angezeigt wird.

2. Verfahren nach Anspruch 1, wobei das Verfahren ferner den Schritt des Übermittelns einer Reaktion umfasst, wenn ein Nutzer einen spezifischen Kommunikationskanal auswählt.

3. Verfahren nach Anspruch 1 oder 2, wobei durch Anklicken eines in dem Menü dargestellten Icons eine Reaktion an den Sender des ausgewählten Kommunikationselements gesendet wird.

4. Verfahren nach Anspruch 1, wobei das Verfahren ferner den Schritt des Anzeigens des auf das Datenelement bezogenen Icons in zwei Abschnitten umfasst, wobei ein Kontaktabschnitt (502) den Sender identifiziert und ein Inhaltsabschnitt den Kommunikationsinhalt (503) beinhaltet.

5. Verfahren nach Anspruch 4, wobei das Verfahren ferner den Schritt des Platzierens eines Zeigeelements (601) auf dem Kontaktabschnitt (502) des auf das Datenelement bezogenen Icons umfasst, um alle verfügbaren Kontaktinformationen des Senders anzuzeigen.

6. Kommunikationsvorrichtung (105), welche mit einer Anzeige (200) und Verarbeitungsmitteln zur Steuerung der Anzeige versehen ist, um die grafische Benutzeroberfläche anzuzeigen, um das Verfahren gemäß einer oder mehrerer der vorhergehenden Ansprüche auszuführen.

7. System, aufweisend eine Kommunikationsvorrichtung (105) und einen Server (103), auf welchem Datenelemente gespeichert sind, wobei die Kommunikationsvorrichtung und der Sever durch ein Kommunikationsnetzwerk (104) verbunden sind, wobei die Kommunikationsvorrichtung eine Vorrichtung gemäß Anspruch 6 zum Ausführen eines Verfahrens gemäß einem oder mehrerer der Ansprüche 1-5 ist.

## Revendications

1. Procédé de communication entre des dispositifs de communication numérique (100, 102, 105) qui sont connectés par un réseau de communication (101, 104), dans lequel le réseau de communication fournit un accès à des données stockées, le procédé étant mis en œuvre par lesdits dispositifs de communication numérique (100, 102, 105) et comprenant la commande d'une unité d'affichage (200) d'un dispositif de communication source (105) pour représenter des icônes (401) à l'intérieur d'une interface utilisateur graphique, dans lequel les icônes sont associées à des données, **caractérisé en ce que** le procédé comprend les étapes de :
- réception d'une sélection d'une icône associée à une donnée reçue d'un expéditeur, la donnée étant l'une des données stockées ;
- commande de l'unité d'affichage pour ouvrir une nouvelle fenêtre (602) contenant des informations de contact de l'expéditeur de la donnée associée à l'icône sélectionnée ;
- proposition d'une sélection de canaux de communication à l'intérieur d'un menu (603) qui est affiché dans la nouvelle fenêtre (602) ;
- fourniture d'une option pour répondre à la donnée par le biais d'un canal de communication différent de celui via lequel la donnée a été reçue de l'expéditeur ; et
dans lequel le procédé comprend en outre les étapes de :
- affichage de l'icône (504-507) par rapport à la donnée en fonction d'un type de données de la donnée par la fourniture d'une icône différente pour chaque type de données différent,
moyennant quoi des éléments de communication (401) sont présentés dans une représentation graphique en perspective de sorte que davantage d'éléments de communication récents sont présentés en premier plan, alors que des éléments de communication plus anciens (401) sont représentés en taille réduite et déplacés vers l'arrière-plan de sorte qu'une impression de perspective est créée pour l'utilisateur,
moyennant quoi si l'utilisateur clique sur l'un des éléments de communication (401), l'icône correspondante (401) est envoyée dans l'arrière-plan de la représentation et est en même temps affichée en plus grande taille.

2. Procédé selon la revendication 1, dans lequel le procédé comprend en outre l'étape de transmission d'une réponse lorsqu'un utilisateur sélectionne un canal de communication spécifique.

3. Procédé selon la revendication 1 ou 2, dans lequel une réponse est envoyée à l'expéditeur de l'élément de communication sélectionné en cliquant sur une icône représentée dans le menu.

4. Procédé selon la revendication 1, dans lequel le procédé comprend en outre l'étape d'affichage de l'icône associée aux données dans deux parties, dans lequel une partie de contact (502) identifie l'expéditeur et une partie de contenu contient le contenu de communication (503).

5. Procédé selon la revendication 4, dans lequel le procédé comprend en outre l'étape de placement d'un élément de pointage (601) sur la partie de contact (502) de l'icône associée à la donnée pour afficher toutes les informations de contact disponibles de l'expéditeur.

6. Dispositif de communication (105) doté d'une unité d'affichage (200) et de moyens de traitement pour commander l'unité d'affichage pour représenter l'interface utilisateur graphique pour exécuter le procédé selon une ou plusieurs des revendications précédentes.

7. Système comprenant un dispositif de communication (105) et un serveur (103) sur lequel des données sont stockées, dans lequel le dispositif de communication et le serveur sont connectés par un réseau de communication (104), dans lequel le dispositif de communication est un dispositif selon la revendication 6 pour exécuter un procédé selon une ou plusieurs des revendications 1-5.
